(19) **Europäisches Patentamt**
**European Patent Office**
**Office européen des brevets**

(11) **EP 2 074 074 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(51) Int Cl.:
***C04B 38/02*** (2006.01)      ***C04B 28/02*** (2006.01)

(21) Anmeldenummer: **07785675.5**

(22) Anmeldetag: **24.07.2007**

(86) Internationale Anmeldenummer:
**PCT/DE2007/001312**

(87) Internationale Veröffentlichungsnummer:
**WO 2008/034403 (27.03.2008 Gazette 2008/13)**

(54) **VERFAHREN ZUR HERSTELLUNG EINES LUFTHÄRTENDEN PORENBETONS AUS BINDEMITTELHALTIGEN GEMISCHEN**

PROCESS FOR PROVIDING AN AIR-CURING EXPANDED CONCRETE COMPOSED OF BINDER-CONTAINING MIXTURES

PROCÉDÉ DE METTRE EN OEUVRE UN BÉTON CELLULAIRE DURCISSANT À L'AIR, CONSTITUÉ DE MÉLANGES CONTENANT DES LIANTS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.09.2006 DE 102006045091**

(43) Veröffentlichungstag der Anmeldung:
**01.07.2009 Patentblatt 2009/27**

(73) Patentinhaber: **Universität Dortmund**
**44227 Dortmund (DE)**

(72) Erfinder:
• **JUST, Armin**
**44137 Dortumund (DE)**
• **MIDDENDORF, Bernhard**
**34379 Calden (DE)**
• **NEISECKE, Jürgen**
**44287 Dortmund (DE)**

(74) Vertreter: **Schneider, Uwe**
**Patentanwalt**
**Holbeinstrasse 27**
**59423 Unna (DE)**

(56) Entgegenhaltungen:
EP-A1- 1 050 521    RU-C1- 2 073 661

• **CHEMICAL ABSTRACTS, Bd. 118, Nr. 20, 17. Mai 1993 (1993-05-17), Columbus, Ohio, US; abstract no.: 196795, BOKOVA, L. I.: "Naturally hardened aerated ash concrete for monolithic house construction" Seite 327 XP000472124 & ENERG. STROIT., Bd. 4, 1992, Seite 61,**
• **CHEMICAL ABSTRACTS, Bd. 114, Nr. 26, 1. Juli 1991 (1991-07-01), Columbus, Ohio, US; abstract no.: 252703, FEDYNIN, N.I.: "Manufacture of unautoclaved aerated ash concrete with increased strength and durability" Seite 344 XP000194882 & STROIT. MATER., Bd. 11, 1990, Seiten 8-11,**
• **DATABASE WPI Week 197340 Derwent Publications Ltd., London, GB; AN 1973-59252U XP002465771 & SU 365 339 A (MOSCOW VV KUIBYSHEV ENG-S) 8. Januar 1973 (1973-01-08)**
• **DATABASE EPODOC EUROPEAN PATENT OFFICE, THE HAGUE, NL; XP002466908 & CN 1 261 600 A (XU JUNYUAN [CN]) 2. August 2000 (2000-08-02) -& DATABASE WPI Week 200059 Derwent Publications Ltd., London, GB; AN 2000-612170 XP002465772 & CN 1 261 600 A (XU J) 2. August 2000 (2000-08-02)**
• **DATABASE WPI Week 199017 Derwent Publications Ltd., London, GB; AN 1990-130686 XP002465773 & SU 1 491 857 A (MOSC ENG-CONS INST) 7. Juli 1989 (1989-07-07)**
• **DATABASE EPODOC EUROPEAN PATENT OFFICE, THE HAGUE, NL; XP002466909 & GR 1 003 397 B2 (KONSTANTINOU GEORGIOS DR) 4. Juli 2000 (2000-07-04)**

## Beschreibung

Die Erfindung betrifft ein Verfahren zur Herstellung eines Porenbetons aus bindemittelhaltigen Gemischen gemäß Oberbegriff des Anspruches 1 sowie einen entsprechend hergestellten Porenbeton gemäß Anspruch 7.

Mineralische Schäume als sehr häufig z.B. im Hausbau verwendete Baustoffe verbinden viele Eigenschaften herkömmlichen Betons mit verbesserten Wärmedämmeigenschaften, leichtem Gewicht und eine gute Verarbeitbarkeit der vorgefertigten Bauteile auf der Baustelle, die z.B. einfach durch Sägen an die jeweils benötigten Endformen angepasst werden können. Nachteilig ist allerdings, dass die Herstellung der typischen Porenbetone nur in entsprechenden Fabriken erfolgen kann, da nach der Formgebung eine Härtung der Bauteile bei erhöhtem Druck und erhöhter Temperatur in Autoklaven erfolgen muss. Weiterhin nachteilig sind die in Vergleich zu Normalbeton geringeren Festigkeitseigenschaften, die dem Einsatz derartiger Porenbetone konstruktive Grenzen setzen.

Bei der Herstellung von mineralisch gebundenen Schäumen kommt es hauptsächlich darauf an, üblicherweise zementgebundene Schäume zu erzeugen, welche die gewünschten physikalisch mechanischen Eigenschaften besitzen. Hierzu gibt es verschiedene Wege, die aufgrund der unterschiedlichen Prozessführung unterschiedliche Eigenschaften der so hergestellten Porenbetone ergeben.

Leichtbetone mit poriger Matrix lassen sich grundsätzlich in zwei verschiedene Klassen einteilen, die jeweils die Herstellungsverfahren widerspiegeln, nämlich die

- Herstellung durch chemisches Auftreiben und die

- Herstellung durch physikalisches Aufschäumen.

Beim durch chemisches Aufschäumen hergestellten Porenbeton entstehen die Poren durch chemische Reaktion eines gaserzeugenden Treibmittels mit dem Bindemittel und Wasser.

Früher wurde durch den Einsatz von Calciumcarbid mit nachfolgender Acetylengasentwicklung oder durch Wasserstoffperoxid und Chlorkalk mit Sauerstoffentwicklung eine Porenentwicklung erreicht. Als Treibmittel wird heutzutage fast ausschließlich Aluminium verwendet, das durch die Bildung von Wasserstoff eine treibende Wirkung erreicht. Bei den verwendeten Mischungen reagieren feinkörniges Aluminium (Al), Calciumhydroxid ($Ca(OH)_2$) aus dem Bindemittel und Wasser miteinander. Bei der Redoxreaktion entsteht Wasserstoff, der die Mischung auftreibt und für die Porenbildung sorgt.

Die Reaktion zur Wasserstoffbildung läuft wie folgt:

$$2\,Al + 3\,Ca(OH)_2 + 6\,H_2O \rightarrow 3\,CaO \cdot Al_2O_3 \cdot 6\,H_2O + 3\,H_2 + Q$$

$$\text{oder } 2\,Al + Ca(OH)_2 + 6\,H_2O \rightarrow CaO\,[Al(OH)_4]_2 + 3\,H_2 + Q$$

Der Wasserstoff diffundiert schon während des Herstellungsprozesses aus dem Beton und es befindet sich im Anschluss nur Luft in den Poren.

Die Aluminiumzusätze werden in pulvriger Form oder als pastenförmige Dispersion verwendet. Die Feinheit der Aluminiumpigmente lässt sich durch die Deckfläche gemäß DIN 55923 beschreiben. Es werden Deckflächen in der Größenordnung von 12000 bis 20000 $[cm^2/g]$ angesetzt.

Der Gasbildungsprozess kann durch die Korngrößenverteilung der Aluminiumpulvers gesteuert werden. Das Volumen jedes Kornes beeinflusst die sich bildende Menge an Wasserstoff. Weiterhin ist die Reaktionszeit von der Kornform abhängig, da verschiedene Formen auch unterschiedliche spezifische Oberflächen und somit Reaktionsflächen besitzen.

Das Herstellungsverfahren hat sich für die Erzeugung von Porenbetonfertigteilen durchgesetzt. Um höhere Festigkeiten zu erzielen und um die Schwindneigung zu verringern werden die Porenbetonfertigteile in der Regel in Wasserdampf unter Druck gehärtet (z.B. 190°C, 12 bar). Die Anwendung ist wegen der Dampfdruckhärtung auf stationär industriell gefertigte Bauteile beschränkt. Die Verwendung dieser Bauteile ist in verschiedenen Vorschriften genormt (DIN 4164, DIN EN 992, DIN EN 1351, DIN EN 1352, DIN EN 1354).

Es sind bei Porenbeton bewehrte und unbewehrte Bauteile möglich. Die Bewehrung erfordert einen separaten Korrosionsschutz wegen der hohen Diffusionsoffenheit des porösen Baustoffes.

Als Eigenschaften und Vorteile der Porenbetonbausysteme sind folgende zu nennen:

- Geringes Gewicht: Die Bauteile sind leicht zu verarbeiten und leicht zu handhaben, ferner haben sie gute Wärmedämmeigenschaften.

- Gute Bearbeitbarkeit: Es kann ohne großen mechanischen Aufwand ein passgenauer Zuschnitt der Bauteile erfolgen. Diese sind einfach zu sägen und für Befestigungen von Installationen kann in Porenbeton genagelt und gedübelt werden.

- Passgenauigkeit: Der Einsatz von Dünnbettmörtel für die Lagerfugen und Nut- und Feder-Systeme für die Stoßfugen reduziert Wärmebrücken im Vergleich zu klassischen Mauermörtelfugen.

Porenbeton eignet sich z.B. für folgende Einsatzgebiete:

- großformatiges Mauerwerk

- Wand- und Deckentafeln

- bewehrte Bauteile für Skelettbauten

Beim Porenleichtbeton / Schaumbeton erfolgt die Herstellung durch physikalisches Aufschäumen und die Poren entstehen mechanisch entweder durch Unterrühren eines getrennt vorgefertigten wässrigen Luftschaums in einen Mörtel oder durch Einrühren von Luft im Mischer nach Zugabe eines grenzflächenaktiven Schaums oder Luftporenbildners. Hierfür werden üblicherweise Tenside verwendet, bei denen deren ambiphile Eigenschaften ausgenutzt werden. Ein wichtiges Kriterium ist dabei die Stabilität des erzeugten Schaums. Ein weiteres Verfahren ist die Begasung von Zementleim bzw. Mörtel. Der Porenleichtbeton wird wegen der getrennten Schaumerzeugung auch Schaumbeton genannt.
Die Erzeugung eines Schaums aus einem Schaumbildner und Wasser ist mit einem Schaumgerät praktikabel und kann auch auf der Baustelle direkt erfolgen. Es lassen sich stabile Schäume erzeugen, die gut mit dem Frischbeton vermischt werden können. Der Porenleichtbeton wird in fließfähiger, pumpbarer Konsistenz gefertigt, da zähere Konsistenzen zu einer Verringerung des Schaumanteils führen würden und somit die Porenstruktur zerstört wäre. Aufgrund dieser Konsistenz ist der Porenleichtbeton weitgehend selbst nivellierend und erreicht ohne Verdichtung auch sonst schwer zugängliche Hohlräume. Der Porenleichtbeton ist im Vergleich zu körnigem Verfüllmaterial setzungsfrei.
Für den Porenleichtbeton gibt es derzeit beispielsweise folgende Einsatzgebiete:

- Sanierung von zweischaligem Mauerwerk historischer Bauwerke

- Porenleichtbeton wird zum Verfüllen von Hohlräumen aller Art verwendet. Es sind Anwendungen aus der Grabenverfüllung im Rohrleitungsbau, Hohlraumverfüllung stillgelegter Kanalisationen oder Tanks oder auch Stabilisierungen z. B. von Straßen nach Unterspülungen durch starke Niederschläge zu nennen.

- Der Porenleichtbeton kann für Unterbauten im Straßenbau verwendet werden, und trägt mit geringerem Gewicht dazu bei, dass weniger Setzungen insbesondere bei weichen Untergründen auftreten.

- Bei Erdarbeiten wird er für Stabilisierungsmaßnahmen oder Lastverteilungen eingesetzt. Dabei werden die hohe Fließfähigkeit und die ausreichende Festigkeit ausgenutzt, so dass hier - im Gegensatz zur klassischen Verfüllung - erschütterungsfrei ohne zusätzliche Verdichtung gearbeitet werden kann.

- Herstellung von Wärmedämmungen im Dachbereich zum Beispiel bei Flachdächern mit Neigungen und vorgegebener Druckfestigkeit, die damit bei gleichzeitiger Gewichtsreduktion begehbar und befahrbar sind.

Die Erhärtung erfolgt in der Regel unter atmosphärischem Druck bei Umgebungstemperatur durch Hydratation des Bindemittels Zementes.
Die Vielseitigkeit des Porenleichtbetons zeigt sich durch eine Bandbreite einstellbarer Dichten und ist begrenzt durch technologische Grenzen, die sich unter anderem in der Betonfestigkeit oder der -dichtigkeit auswirken.
Die Eigenschaften von zementgebundenen mineralischen Schäumen werden dabei vornehmlich von ihrer Zusammensetzung und ihrer Verarbeitung bestimmt.
Der heutige fabrikmäßig hergestellte Porenbeton wird für gewöhnlich aus einer Mischung von Kalk, Zement mit Quarzsand und Wasser unter Verwendung eines Porenbildners bzw. Schaumbildners produziert. Er weist aufgrund seiner zahlreichen Poren eine relativ geringe Rohdichte im Vergleich zu normalen Betonen auf. Auch die anderen bauphysikalischen Eigenschaften weichen erheblich von denen des Normalbetons ab. Nachfolgend ein Vergleich zwischen Porenbeton und normalem Beton, wobei auf eine Aufstellung der Eigenschaften von Schaumbeton an dieser Stelle verzichtet wird, da Festigkeiten, Elastizitätsmodul, etc. einen Einsatz als Konstruktionsbaustoff ausschließen.
Die Rohdichte des Porenbetons liegt zwischen 0,30 bis 1,00 kg/dm$^3$ (Normalbeton: ca. 2,4 kg/dm$^3$).
Der Elastizitätsmodul für Porenbeton liegt in Abhängigkeit von der jeweiligen Rohdichte zwischen 12.000 bis

25.000 N/mm$^2$ (Normalbeton: > 30.000 N/mm$^2$).

Die Druckfestigkeit von Porenbeton beträgt ca. 2,5 bis 10,0 N/mm$^2$ (Normalbeton: i.d.R. > 20 N/mm$^2$).

Die zentrische Zugfestigkeit von Porenbeton sowie von Normalbeton ist nur ca. 10% der Druckfestigkeit.

Die Wärmeleitfähigkeit des Porenbetons ist vergleichsweise sehr niedrig. Sie liegt in Abhängigkeit von der Rohdichte bei ca. 0,11 bis 0,29 W/(m K) (Normalbeton: 2,10 W/(m K)) .

Die thermische Ausdehnung des Porenbetons beträgt in einem Temperaturintervall von 20 Grad bis 100 Grad Celsius etwa 0,008 mm/(m K) ($\alpha_{tb}$ ist in etwa gleich wie bei Normalbeton, da gleiches Material.) (Normalbeton: $\alpha_{tb} = 10^{-5}$ K).

Der Rechenwert des Schwindmaßes ist nach DIN 1053 Teil 1 mit 0,2 mm/m festgelegt (Normalbeton: 2,28 bis 0,60 mm/m).

Die Porenbetone und Porenleichtbetone zeichnen sich aufgrund ihrer porigen Struktur als gute Wärmedämmstoffe aus. Aufgrund ihrer mineralischen Zusammensetzung sind sie nicht brennbar.

Die heute eingesetzten lufthärtenden Schaumbetone können zwar direkt auf der Baustelle angemischt werden, sind aber in ihren Eigenschaften stark begrenzt und auf Grund ihrer geringen Festigkeiten nicht als Konstruktionsbaustoff einsetzbar. Die autoklavgehärteten Porenbetone garantieren zwar höhere Festigkeiten, können allerdings nur stationär in bestimmten Porenbetonwerken in Autoklaven hergestellt werden. Die Fertigung in herkömmlichen Betonfertigteilwerken oder sogar auf der Baustelle ist ausgeschlossen.

Aus der EP 1 050 521 A1 ist ein Blasenbeton bekannt, der unter adiabatischen Bedingungen aushärtet. Aus der Chemical Abstracts, Bd. 118, Nr. 20, 17. Mai 1993 Columbus, Ohio, US; abstract no.:196795, BOKOVA, L. I.: "Naturally hardened aerated ash concrete for monolithic house construction", Seite 327 ist ein aschebasierter Porenbeton bekannt.

Aufgabe der vorliegenden Erfindung ist es daher, einen Porenbeton derart weiter zu entwickeln, dass er neben den vorteilhaften Eigenschaften bekannter Porenbetone wie Wärmedämmung, Rohdichte etc. insbesondere verbesserte Belastbarkeitswerte aufweist und daher auch konstruktiv in Bereichen eingesetzt werden kann, die bei Porenbetonen insbesondere auch für die Herstellung auf der Baustelle nicht möglich waren.

Die Lösung der erfindungsgemäßen Aufgabe ergibt sich aus den kennzeichnenden Merkmalen des Anspruches 1 bezüglich eines Verfahrens zur Herstellung eines Porenbetons und aus den kennzeichnenden Merkmalen des Anspruches 7 bezüglich eines entsprechend hergestellten Porenbetons in Zusammenwirken mit den Merkmalen des zugehörigen Oberbegriffes. Weitere vorteilhafte Ausgestaltungen der Erfindung ergeben sich aus den Unteransprüchen.

Die Erfindung geht aus von einem Verfahren zur Herstellung eines Porenbetons aus bindemittelhaltigen Gemischen, aus

- Bindemittel aus Portlandzement gemäß DIN EN 197 oder aus Mischungen hydraulisch, latent hydraulisch und/oder puzzolanisch abbindender Bindemittel,

- Wasser mit einem Anteil von 20 - 60 Massen-% bezogen auf die Masse des Bindemittels in der Mischung,

- Aluminiumpulver als chemisches Treibmittel mit 0,05 - 0,25 Massen-% bezogen auf die Masse des Bindemittels zur Bildung überwiegend von Luftporen in dem Porenbeton, wobei das Treibmittel in Form eines Pulvers eine Mischung unterschiedlicher Partikelgrößen bildet,

- Betonzusatzstoffen ausgewählt aus der Gruppe von Microsilica, aufgemahlener Hüttensand und/oder Flugasche mit einem Anteil von 0,5 - 25 Massen-% bezogen auf die Masse des Bindemittels,

- Betonzusatzmittel mit überwiegend verflüssigendem Charakter und einem Anteil von 0,5 - 5 Massen-% bezogen auf die Masse des Bindemittels,

und weist folgende weitere Verfahrensschritte auf:

- Bindemittel, Betonzusatzstoffe und Betonzusatzmittel werden miteinander vermischt,

- das Aluminiumpulver als chemisches Treibmittel wird als Mischung unterschiedlicher Partikelgrößen dem Gemisch in vollständig dispergiertem Zustand der Partikel in Wasser beigegeben,

- das Gemisch wird zu Beginn der Reaktionen des Abbindens durch Wasserzugabe auf eine Frischbetonkonsistenz mindestens der Konsistenzklasse F4 (sehr weich) nach DIN 1045-2 eingestellt,

- das derart hergestellte bindemittelhaltige Gemisch wird von dem Treibmittel unter Bildung von Luftporen unterschiedlicher Größe und im Wesentlichen homogener Verteilung chemisch aufgetrieben und

- härtet unter atmosphärischem Druck bei normaler Umgebungstemperatur durch Hydratation des Bindemittels aus.

Ein derart verfahrensgemäß hergestellter Porenbeton stellt einen neuartigen Konstruktionsbaustoff dar, der hohe Festigkeiten bei gleichzeitig geringem spezifischen Eigengewicht garantiert. Dieser Baustoff verfügt darüber hinaus über sehr gute Wärmedämmeigenschaften, ist dauerhaft feuchtebeständig und nicht entflammbar und brennbar. Er verbindet das chemische Auftreiben eines mineralisch gebundenen Bindemittelleims mit der anschließenden Erhärtung unter atmosphärischem Druck bei normaler Temperatur durch Hydratation des Zementes als Bindemittel. Diese Resultate werden im wesentlichen durch zwei Maßnahmen erreicht.

Durch eine gezielte Luftporenverteilung wird die Festigkeit des Porenbetons optimiert. Diese Optimierung wird über die Zugabemenge und Partikelgröße des Treibmittels Aluminiumpulver sowie über die Frischmörtelkonsistenz eingestellt. Liegt das Treibmittel vollständig dispergiert im Anmachwasser vor, so ist auch jedes Treibmittelpartikel für die Ausbildung einer Luftpore verantwortlich. Werden dabei Treibmittelpartikel unterschiedlicher Partikelgrößen verwendet und inniglich miteinander und mit den anderen Bestandteilen des Porenbetons vermischt, so bildet sich eine sehr gleichmäßige und dichte Verteilung der Luftporen in der Matrix des Porenbetons aus, die bei gleichbleibender Rohdichte des Porenbetons eine wesentliche Verbesserung der Festigkeitswerte des Porenbetons ermöglicht. Der Durchmesser einer Pore wird neben der Masse des reagierenden Treibmittelpartikels zusätzlich noch durch die Frischmörtelkonsistenz beeinflusst. Eine niedrige Viskosität des Frischmörtels führt zu geringeren Porendurchmessern, eine hohe Viskosität demnach zu größeren. Wird die Viskosität zu hoch, besteht die Gefahr des Entmischens. Die Luftporen steigen dann an die Oberfläche. Damit bieten sich über die Partikelgröße der Treibmittelpartikel sowie deren Anzahl und Verteilung im frischen Porenbeton viele Möglichkeiten, die Porenverteilung und Porengröße gezielt zu beeinflussen.

Darüber hinaus werden zusätzlich zu dieser Optimierung der Porenverteilung des Porenbetons durch die gezielte Optimierung der Zementsteinmatrix die Druckfestigkeit und der Elastizitätsmodul der bereits heute herstellbaren Porenbetone weit überschritten. Erreicht werden kann die Optimierung der Matrix des Zementsteins durch die Verarbeitung der angegebenen Betonzusatzmittel und Betonzusatzstoffe, die je nach Einsatzfall die Eigenschaften der Zementsteinmatrix variierbar machen. Das Gefüge dieser Zementsteinmatrix wird über ein verringertes Wasser/Zement-Verhältnis und mittels Einsatz von Betonzusatzmitteln (z.B. Betonverflüssiger) und Betonzusatzstoffen (z.B. Mikrosilica) verbessert. Hierfür gelten die gleichen Ansätze wie diese für die Herstellung von Hochfesten und Ultrahochfesten Betonen (HPC bzw. UHPC) bereits erforscht sind oder zur Zeit erforscht werden.

Somit lassen sich Baustoffe herstellen, die eine Druckfestigkeit von bis zu 30,0 N/mm$^2$ besitzen und dabei eine Rohdichte von 1,0 g/cm$^3$ nicht überschreiten. Die Vorteile der Erfindung liegen zum Einen in der Ortsungebundenheit der Herstellung des Baustoffes (Betonfertigteilwerk, Baustelle) und zum Anderen in der Verbesserung der physikalisch-mechanischen Eigenschaften des erhärteten Endproduktes (höhere Festigkeiten bei gleichem spezifischem Gewicht im Vergleich zu heute üblichen Porenbetonen). Die Trockenrohdichten entsprechen denen von autoklavgehärteten Porenbeton. Die Festigkeiten des neuen Porenbetons sind wegen der gezielt optimierten Zementsteinmatrix deutlich höher als die des autoklavgehärteten Porenbetons. Mit diesen Porenbetonen können auch in herkömmlichen Betonfertigteilwerken **und** auf der Baustelle lufthärtende mineralisch gebundene Schäume hergestellt werden, die die Eigenschaften, die heute an hochwertige moderne Konstruktionsbaustoffe gestellt werden.

Von besonderem Vorteil ist es, dass der Porenbeton eine Frischmörtelkonsistenz zu Beginn der Reaktionen beim Abbinden mindestens der Konsistenzklasse F4 (sehr weich) nach DIN 1045-2 aufweist. Hierdurch ist einerseits die Expansion der Poren nicht zu sehr aufgrund der Steifigkeit des Bindemittelleims eingeschränkt, andererseits können die sich bildenden Poren nicht an die Oberfläche des Porenbetons aufsteigen und so in unvorteilhafter Weise aus dem Porenbeton austreten. Die Frischmörtelkonsistenz kann beispielsweise anhand genormter Verfahren und Anordnungen erfasst werden, beispielsweise mittels der Bestimmung des Ausbreitmaßes nach DIN EN 12350-5 bzw. DIN 1045-2. Hinsichtlich der Ausbildung der Zementsteinmatrix ist es denkbar, dass der Porenbeton eine Matrix aus Beton hoher oder sehr hoher Festigkeit und geringer Permeabilität, vorzugsweise aus sog. Ultrahochleistungsbeton UHPC oder Hochleistungsbeton HPC aufweist. Derartige Ultrahochleistungsbetone oder Hochleistungsbetone werden für Einsatzzwecke herkömmlichen Betons, nicht jedoch von Leichtbetonen entwickelt. Die dort vorhandenen Lösungsansätze zur Erhöhung der Festigkeiten der Zementsteinmatrix wie insbesondere die Verwendung von Betonzusatzstoffen wie insbesondere Microsilica oder die Verringerung des Wasseranteils auf einen Anteil von kleiner als 40 Massen-% können in Zusammenwirkung mit der beschriebenen Porenbildung weitere Verbesserungen der Festigkeitswerte des Porenbetons bewirken, die mit anderen Zusammensetzung bekannter Leichtbetone nicht erreichbar sind.

Von Vorteil ist es weiterhin, wenn die Rohdichte des Porenbetons bis zu 1000 kg/m$^3$ beträgt. Durch eine derartige Rohdichte liegt der Porenbeton weiterhin trotz der verbesserten Festigkeitseigenschaften in Gewichtsbereichen, die herkömmlichen Leichtbetonen und insbesondere den autoklavgehärteten Porenbetonen entspricht und kann daher auch bei dort üblichen Einsatzzwecken derartige Porenbetone unproblematisch ersetzen.

Von Wichtigkeit ist es weiterhin, dass das chemische Treibmittel in Form von z.B. Aluminiumpulver in vollständig dispergiertem Zustand der Aluminiumpartikel in dem Wasser dem Gemisch des Porenbetons beigegeben wird. Hierdurch wird erreicht, dass jedes Partikel des Treibmittelpulvers auch eine seiner Größe entsprechende Luftpore bildet und damit die Ausbeute an Poren in dem Porenbeton optimiert wird. Insbesondere, wenn die Partikel unterschiedlicher Partikelgröße des chemischen Treibmittels in Form von Aluminiumpulver trocken vor der Dispergierung in Wasser miteinander vermischt werden, lässt sich eine sehr homogene Verteilung der Partikel des Treibmittels in dem Bindemittelleim sowie eine dichte Packung der Poren in der späteren Matrix des ausgehärteten Porenbetons mit den schon beschriebenen Vorteilen für die Festigkeit erreichen.

Hierbei ist es von Bedeutung, dass die Poren des Porenbetons im wesentlichen als Luftporen unterschiedlicher Porengröße ausgebildet sind. Derartige Luftporen weisen gegenüber den sich ebenfalls bildenden Gelporen und den Kapillarporen im Hinblick auf die Festigkeitsoptimierung wesentliche Vorteile auf, da sie wesentlich größer als die Gelporen und die Kapillarporen sind und ihre Bildung besser beeinflusst werden kann. Insbesondere kann die jeweilige Porengröße der Poren des Porenbetons abhängig von der Partikelgröße der Treibmittelpartikel und der Frischmörtelkonsistenz des Porenbetons zu Beginn der Reaktionen des Abbindens gut beeinflusst und damit die Festigkeitswerte sowie die Rohdichte des Porenbetons gezielt gesteuert werden. Gelporen hingegen sind betontechnologisch kaum beeinflussbar und Bestandteil des erhärteten Zementsteins. Kapillarporen wiederum lassen sich durch das Wasser/Zement-Verhältnis beeinflussen. Je weniger Wasser bei dem Anmischen des Bindemittelleims verwendet wird, umso geringer ist auch der Anteil an Kapillarporen. Kapillarporen entstehen, wenn im Zementleim Überschusswasser vorhanden ist, welches während der Erhärtungsreaktion (Hydratation) nicht chemisch mit den Reaktionspartnern zu Calcium-Silikat-Hydrat-Phasen (CSH-Phasen) umgesetzt wird.

Die Erfindung beschreibt ein Verfahren zur Herstellung eines Porenbetons aus bindemittelhaltigen Gemischen mit einem chemischen Treibmittel zur Einlagerung einer Vielzahl von Poren in der Betonmatrix sowie Betonzusatzstoffen und Betonzusatzmitteln. Hierbei werden Bindemittel, Betonzusatzstoffe und Betonzusatzmittel miteinander vermischt, das chemische Treibmittel in Form von Aluminiumpulver als Mischung unterschiedlicher Partikelgrössen dem Gemisch in vollständig dispergiertem Zustand der Partikel in Wasser beigegeben und das Gemisch zu Beginn der Reaktionen des Abbindens durch Wasserzugabe auf eine Frischbetonkonsistenz mindestens der Konsistenzklasse F4 (sehr weich) nach DIN 1045-2 eingestellt, wonach der derart hergestellte Bindemittelleim von dem Treibmittel unter Bildung von Luftporen unterschiedlicher Größe und im wesentlichen homogener Verteilung chemisch aufgetrieben wird und unter atmosphärischem Druck bei normaler Umgebungstemperatur durch Hydratation des Bindemittels aushärtet. Hierdurch wird erreicht, dass sich einerseits die Poren in gewünschter Größe und möglichst homogener Größenverteilung innerhalb des Bindemittelleims entstehen können und andererseits in diesem Zustand dann durch die Hydratation des Bindemittels in dem erreichten Zustand quasi eingefroren werden und die vorteilhafte Matrixstruktur des Porenbetons bilden. Durch die Veränderung der Mischung und der Partikelgrößen des pulverigen Treibmittels, wobei hier Aluminium zum Einsatz kommt sowie die gezielte Beeinflussung der Konsistenz des Bindemittelleims zumindest zu Beginn der Expansion der Poren können die späteren Festigkeitseigenschaften des Porenbetons in weiten Grenzen gesteuert werden.

In weiterer Ausgestaltung kann die Festigkeit der Matrix des Porenbetons durch Verringerung des Wasseranteils auf einen Anteil von kleiner als 40 Massen-% und/oder durch eine Zugabe von Microsilika und/oder Flugasche mit einem Anteil von 0,5 - 25 Massen-% bezogen auf die Masse des Bindemittels erhöht werden. Damit steht mit der Beeinflussung der angegebenen Zusammensetzungskomponenten eine weitere Beeinflussungsmöglichkeit für die Eigenschaften des Porenbetons zur Verfügung. Eine besonders bevorzugte Ausführungsform des erfindungsgemäßen Verfahrens bzw. Porenbetons zeigt die Zeichnung.

Es zeigen:

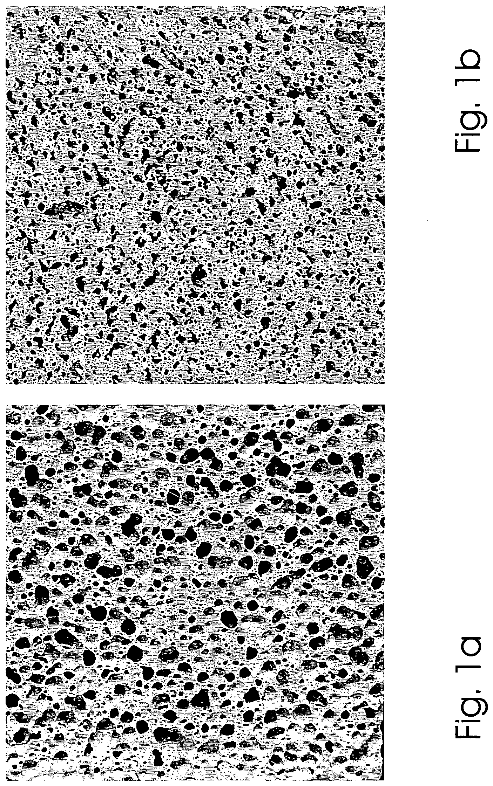

Figur 1a, 1b -    Schnittansichten von zwei exemplarischen Proben eines erfindungsgemäßen Porenbetons,

Die Erfindung soll hinsichtlich konkreter Ausgestaltungen des Porenbetons anhand einiger Beispiele typischer Zusammensetzungen des Porenbetons und damit erreichter Festigkeitswerte erläutert werden.

Prozentuale Mengenangaben beziehen sich immer auf die Bindemittelmenge, hier die Zementmenge. Das heißt zum Beispiel: Aluminiummenge: 0,08 % bedeutet 0,8g Al je 1000g Zement. Die Beispiele 1 bis 3 sind nicht erfindungsgemäß, die Beispiele 4 und 5 sind erfindungsgemäß zusammengesetzt.

**Beispiel 1: Zement, Wasser, Aluminium**

| Ausgangsstoffe | | Ermittelte Eigenschaften | |
|---|---|---|---|
| Zementart: | CEM I 42,5 R | Rohdichte: | 0,77 g/cm$^3$ |
| Wasser/Zement-Verhältnis: | 0,60 | Druckfestigkeit: | 9 N/mm$^2$ |
| Aluminiummenge: | 0,1 % | | |

(fortgesetzt)

| Ausgangsstoffe | | Ermittelte Eigenschaften |
|---|---|---|
| Mittl. Korngröße Aluminium: | 20-30 μm | |

**Beispiel 2: Zement, Wasser, Aluminium, Silicastaub**

| Ausgangsstoffe | | Ermittelte Eigenschaften | |
|---|---|---|---|
| Zementart: | CEM I 42,5 R | Rohdichte: | 0,95 g/cm³ |
| Wasser/Zement-Verhältnis: | 0,60 | Druckfestigkeit: | 12 N/mm² |
| Aluminiummenge: | 0,08 % | | |
| Mittl. Korngröße Aluminium: | 60-70 μm | | |
| Silicastaubmenge: | 7 % | | |

**Beispiel 3: Zement, Wasser, Aluminium, Verflüssiger**

| | | | |
|---|---|---|---|
| Zementart: | CEM I 42,5 R | Rohdichte: | 1,17 g/cm3 |
| Wasser/Zement-Verhältnis: | 0,28 | Druckfestigkeit: | 19 N/mm2 |
| Verflüssigermenge: | 0,4 % | | |
| Aluminiummenge: | 0,08 % | | |
| Mittl. Korngröße Aluminium: | 60-70 μm | | |
| Ausgangsstoffe | | Ermittelte Eigenschaften | |

**B ispi l 4: Zement, Wasser, Aluminium, Verflüssiger, Silicastaub**

| | | | |
|---|---|---|---|
| Zementart: | CEM I 42,5 R | Rohdichte: | 1,1g/cm³ |
| Wasser/Zement-Verhältnis: | 0,40 | Druckfestigkeit: | 17 N/mm² |
| Verflüssiger: | 1,5% | | |
| Aluminiummenge: | 0,1 % | | |
| Mittl. Korngröße Aluminium: | 42-50 μm | | |
| Silicastaubmenge: | 10% | | |
| Ausgangsstoffe | | Ermittelte Eigenschaften | |

**Beispiel 5: Zement, Wasser, Aluminium, Verflüssiger, Silicastaub**

| Ausgangsstoffe | | Ermittelte Eigenschaften | |
|---|---|---|---|
| Zementart: | CEM I 42,5 R | Rohdichte: | 1,24 g/cm³ |
| Wasser/Zement-Verhältnis: | 0,35 | Druckfestigkeit: | 23 N/mm² |
| Verflüssiger: | 1,5 % | | |
| Aluminiummenge: | 0,1 % | | |
| Mittl. Korngröße Aluminium: | 75-85 μm | | |
| Silicastaubmene: | 10 % | | |

Wie man anhand der verschiedenen Zusammensetzungen und der jeweils an entsprechenden Proben ermittelten Eigenschaften erkennen kann, lassen sich die Festigkeitswerte und insbesondere die Druckfestigkeit des erfindungsgemäßen Porenbetons in weiten Grenzen variieren und erreichen Werte, die mit herkömmlichen matrixporige Feinkornleichtbetonen nicht erreicht werden konnten.

Zwei Beispiele für die Matrixausbildung eines erfindungsgemäßen Porenbetons lassen sich in der Figur 1a und 1b erkennen. Hierbei hat der jeweilige Porenbeton folgende Bestandteile:

| Figur 1a: | Zementart: | CEM I 42,5 R |
|---|---|---|
| | Wasser/Zement-Verhältnis: | 0,45 |
| | Verflüssiger: | 1,0 % |
| | Aluminiummenge: | 0,1 % |
| | Mittl. Korngröße Aluminium: | 75-85 μm |
| | Silicastaubmenge: | 5 % |

| Figur 1b: | Zementart: | CEM I 42,5 R |
|---|---|---|
| | Wasser/Zement-Verhältnis: | 0,35 |
| | Verflüssiger: | 1,0 % |
| | Aluminiummenge: | 0,1 % |
| | Mittl. Korngröße Aluminium: | 75-85 μm |
| | Silicastaubmenge: | 5 % |

Wie sich unschwer erkennen lässt, weist der in der Figur 1a dargestellte Matrix wesentlich größere Poren als die in der Figur 1b dargestellte Matrix auf und damit auch die geringere Rohdichte. Die Verteilung der Poren sowie deren Größenverteilung ist im wesentlichen homogen über den Querschnitt verteilt.

Weiterhin ist ein Messaufbau für die Bestimmung der Frischbetoneigenschaften mittels eines Prüfverfahrens über einen Auftreibversuch denkbar. Direkt nachdem der Frischbeton gemischt wird, wird dieser mittels eines an einem Kunststoffrohr befestigten Trichters in ein PMMA-Rohr (z.B. Ø 50mm) gefüllt, das in einem Stativ gehalten ist. Unmittelbar nach dem Einfüllen in das Rohr wird die Ausgangshöhe der Mischung abgelesen. In den nachstehend genannten Zeitabständen wird nun der Höhenstand der Zementsäule abgelesen und festgehalten. Die Volumenzunahme liefert wichtige Erkenntnisse zur Beurteilung der Porosität. Da die Mischungszusammensetzung bekannt ist, sind auch das angestrebte Porenvolumen und die Porenverteilung bekannt und können mit den aus einem genormten Versuch gewonnenen Werten verglichen werden. Eine unvollständige Dispergierung und Entmischungen können durch das transparente PMMA-Rohr beobachtet werden.

Nach dem Anmischen des frischen Porenbetons ist aufgrund der Reaktion des Treibmittelpulvers eine Volumenzunahme festzustellen. Diese wird im Rahmen dieser Messung verfolgt und in schon im Voraus definierten Intervallen festgehalten. Außerdem werden etwaige Besonderheiten über den gesamten Messungsverlauf wiedergegeben.

Die zeitlichen Messintervalle werden beispielsweise wie folgt definiert:

| Minute | Intervall |
|---|---|
| 0,0 bis 10,0 | alle 30 Sekunden |
| 10,0 bis 20,0 | alle 60 Sekunden |
| 20,0 bis - Ende der Messung | alle 5 Minuten |

Anhand der Ausgangshöhe und der abgelesenen Höhenstände kann man die Volumenänderung angeben.

$$A = \frac{h_i \times 100}{h_0} - 100 \ [\%]$$

mit:

$h_i$ [cm]: Höhe des aufgetriebenen Porenbetons
$h_0$ [cm]: Höhe des eingefüllten, noch nicht aufgetriebenen Porenbetons
A [%] : Auftreibmaß

**Patentansprüche**

1. Verfahren zur Herstellung eines Porenbetons aus bindemittelhaltigen Gemischen bestehend aus

   - Bindemittel aus Portlandzement gemäß DIN EN 197 oder aus Mischungen hydraulisch, latent hydraulisch und/oder puzzolanisch abbindender Bindemittel,
   - Wasser mit einem Anteil von 20 - 60 Massen-% bezogen auf die Masse des Bindemittels in der Mischung,
   - Aluminiumpulver als chemisches Treibmittel mit 0,05 - 0,25 Massen-% bezogen auf die Masse des Bindemittels zur Bildung überwiegend von Luftporen in dem Porenbeton, wobei das Treibmittel in Form eines Pulvers eine Mischung unterschiedlicher Partikelgrößen bildet,
   - Betonzusatzstoffen ausgewählt aus der Gruppe von Microsilica, aufgemahlener Hüttensand und/oder Flugasche mit einem Anteil von 0,5 - 25 Massen% bezogen auf die Masse des Bindemittels,
   - Betonzusatzmittel mit überwiegend verflüssigendem Charakter und einem Anteil von 0,5 - 5 Massen-% bezogen auf die Masse des Bindemittels,

   **dadurch gekennzeichnet, dass**

   - Bindemittel, Betonzusatzstoffe und Betonzusatzmittel miteinander vermischt werden,
   - das Aluminiumpulver als chemisches Treibmittel als Mischung unterschiedlicher Partikelgrößen dem Gemisch in vollständig dispergiertem Zustand der Partikel in Wasser beigegeben wird,
   - das Gemisch zu Beginn der Reaktionen des Abbindens durch Wasserzugabe auf eine Frischbetonkonsistenz mindestens der Konsistenzklasse F4 (sehr weich) nach DIN 1045-2 eingestellt wird,
   - das derart hergestellte bindemittelhaltige Gemisch von dem Treibmittel unter Bildung von Luftporen unterschiedlicher Größe und im Wesentlichen homogener Verteilung chemisch aufgetrieben wird und
   - unter atmosphärischem Druck bei normaler Umgebungstemperatur durch Hydratation des Bindemittels aushärtet.

2. Verfahren gemäß Anspruch 1, **dadurch gekennzeichnet, dass** die Verteilung der unterschiedlich großen Luftporen in der Matrix des Porenbetons über die Zugabemenge und die Partikelgröße des Treibmittels im Gemisch sowie über die Frischmörtelkonsistenz eingestellt wird.

3. Verfahren gemäß einem der Ansprüche 1 oder 2, **dadurch gekennzeichnet, dass** dem Gemisch Fasern zur Erhöhung der Zugfestigkeit des Porenbetons zugegeben werden.

4. Verfahren gemäß Anspruch 1, **dadurch gekennzeichnet, dass** die Partikel unterschiedlicher Partikelgröße des Aluminiumpulvers trocken vor der Dispergierung in Wasser miteinander vermischt werden.

5. Verfahren gemäß Anspruch 1, **dadurch gekennzeichnet, dass** die Festigkeit der Matrix des Porenbetons durch Verringerung des Wasseranteils auf einen Anteil von kleiner als 40 Massen-% erhöht wird.

6. Verfahren gemäß einem der vorstehenden Ansprüche, **dadurch gekennzeichnet, dass** die Festigkeit der Matrix des Porenbetons durch eine Zugabe von Microsilika und/oder Flugasche und/oder Hüttensand mit einem Anteil von 0,5 - 25 Massen-% bezogen auf die Masse des Bindemittels erhöht wird.

7. Porenbeton hergestellt nach dem Verfahren gemäß einem der Ansprüche 1 bis 5, wobei die Verteilung der unterschiedlich großen Luftporen in der Matrix des Porenbetons in Abhängigkeit von seiner Konsistenz eine Druckfestigkeit bis zu 30 N/mm$^2$ nach dem Aushärten ermöglicht und der Porenbeton unter atmosphärischem Druck bei normaler Umgebungstemperatur lufthärtend ist.

8. Porenbeton gemäß Anspruch 7, **dadurch gekennzeichnet, dass** die Poren des Porenbetons in einer im wesentlichen gleichmäßigen Verteilung der Poren unterschiedlicher Größe innerhalb der Matrix des Porenbetons vorliegen.

9. Porenbeton gemäß einem der Ansprüche 7 oder 8, **dadurch gekennzeichnet, dass** der Porenbeton eine Matrix aus Beton hoher oder sehr hoher Festigkeit und geringer Permeabilität, vorzugsweise aus sog. Ultrahochleistungsbeton UHPC oder Hochleistungsbeton HPC aufweist.

10. Porenbeton gemäß einem der Ansprüche 7 bis 9, **dadurch gekennzeichnet, dass** die Rohdichte des Porenbetons bis zu 1200 kg/m$^3$ beträgt.

**Claims**

1. Process for producing an aerated concrete from binder-containing mixtures consisting of

    - binders of Portland cement according to DIN EN 197 or of mixtures of hydraulic, latent hydraulic and/or pozzolanic setting binder,
    - water in a proportion of 20 - 60% by mass relative to the mass of the binder in the mixture,
    - aluminum powder as a chemical foaming agent with 0.05 - 0.25 % by mass relative to the mass of the binder to form predominantly air voids in the aerated concrete, wherein the foaming agent in the form of a powder forms a mixture of different particle sizes,
    - concrete additives selected from the group of microsilica, ground granulated blast furnace slag and/or fly ash with a proportion of 0.5 - 25 % by mass relative to the mass of the binder,
    - concrete admixtures of predominantly liquefying character and in a proportion of 0.5 - 5% by mass relative to the mass of the binder,

    **characterized in that**

    - binder, concrete additives and concrete admixtures are mixed together,
    - the aluminum powder is added as a chemical foaming agent as a mixture of different particle sizes to the mixture in fully dispersed state of the particles in water,
    - the mixture is set at the beginning of the reactions of setting by adding water to a fresh mortar consistency of at least the consistency class F4 (very soft) according to DIN 1045-2,
    - the thus prepared binder-containing mixture is chemically distended by the foaming agent by forming air voids of different sizes and substantially homogeneous distribution, and
    - hardens under atmospheric pressure at normal ambient temperature by means of hydration of the binder.

2. The process according to claim 1, **characterized in that** the distribution of the different sized air voids in the matrix of the aerated concrete is set by means of the quantity added and the particle size of the foaming agent in the mixture and by means of the fresh mortar consistency.

3. The process according to one of claims 1 or 2, **characterized in that** fibers are added to the mixture to increase the tensile strength of the aerated concrete.

4. The process according to claim 1, **characterized in that** the particles of different particle size of the aluminum powder are mixed dry before dispersing in water.

5. The process according to claim 1, **characterized in that** the strength of the matrix of the aerated concrete is increased by reducing the proportion of water to a proportion of less than 40% by mass.

6. The process according to one of the preceding claims, **characterized in that** the strength of the matrix of the aerated concrete is increased by adding of microsilica and/or fly ash and/or blast furnace slag with a proportion of 0.5 to 25% by mass relative to the mass of binder.

7. Aerated concrete produced by the method according to one of claims 1 to 5, wherein the distribution of different sized air voids in the matrix of the aerated concrete makes possible, depending on its consistency, a compressive strength up to 30 N/mm$^2$ after curing, and the aerated concrete is air-hardening under atmospheric pressure at normal ambient temperature.

8. Aerated concrete according to claim 7, **characterized in that** the voids of the aerated concrete are present in a substantially uniform distribution of the voids of different sizes within the matrix of the aerated concrete.

9. Aerated concrete according to one of claims 7 or 8, **characterized in that** the aerated concrete shows a matrix of concrete of high or very high strength and low permeability, preferably from so-called ultra-high-performance concrete UHPC or high-performance concrete HPC.

10. Aerated concrete according to one of claims 7 to 9, **characterized in that** the bulk density of the aerated concrete is up to 1200 kg/m$^3$.

**Revendications**

1. Procédé pour la production d'un béton cellulaire à partir de mélanges contenant des liants constitués

   - d'un liant composé de ciment Portland selon la norme DIN EN 197 ou composé de mélanges de liants à prise hydraulique, hydraulique latente et/ou pouzzolanique
   - d'eau avec une fraction de 20-60 % en masse par rapport à la masse du liant dans le mélange,
   - de poudre d'aluminium en tant qu'agent porogène chimique avec 0,05-0,25 % en masse par rapport à la masse du liant pour former majoritairement des bulles d'air dans le béton cellulaire, dans lequel l'agent porogène forme, sous la forme d'une poudre, un mélange à tailles de particules différentes,
   - d'additifs pour béton choisi parmi le groupe des microsilices, d'un laitier granulé broyé et/ou de cendres volantes avec une fraction de 0,5-25 % en masse par rapport à la masse du liant,
   - d'adjuvants pour béton avec une nature majoritairement à liquéfaction et une fraction de 0,5-5 % en masse par rapport à la masse du liant,

   **caractérisé en ce que**

   - des liants, des additifs pour béton et des adjuvants pour béton sont mélangés les uns aux autres,
   - la poudre d'aluminium est ajoutée en tant qu'agent porogène chimique en tant que mélange à tailles de particules différentes au mélange dans un état totalement dispersé des particules dans l'eau,
   - le mélange est réglé au début des réactions de la prise du fait de l'ajout d'eau sur une consistance de béton frais au moins de la classe de consistance F4 (très mou) selon la norme DIN 1045-2,
   - le mélange contenant des liants ainsi produit est gonflé par voie chimique par l'agent porogène en formant des bulles d'air à tailles différentes et une répartition sensiblement homogène, et
   - se durcit sous une pression atmosphérique à une température ambiante normale par l'hydratation du liant.

2. Procédé selon la revendication 1, **caractérisé en ce que** la répartition des bulles d'air à tailles différentes est réglée dans la matrice du béton cellulaire par l'intermédiaire de la quantité ajoutée et de la taille de particules de l'agent porogène dans le mélange ainsi que par l'intermédiaire de la consistance du mortier frais.

3. Procédé selon l'une quelconque des revendications 1 ou 2, **caractérisé en ce que** des fibres servant à augmenter la résistance à la traction du béton cellulaire sont ajoutées au mélange.

4. Procédé selon la revendication 1, **caractérisé en ce que** les particules à tailles de particules différentes de la poudre d'aluminium sont mélangées les unes aux autres à sec avant la dispersion dans l'eau.

5. Procédé selon la revendication 1, **caractérisé en ce que** la résistance de la matrice du béton cellulaire est augmentée par réduction de la fraction en eau à une fraction inférieure à 40 % en masse.

6. Procédé selon l'une quelconque des revendications précédentes, **caractérisé en ce que** la résistance de la matrice du béton cellulaire est augmentée par un ajout de microsilice et/ou de cendres volantes et/ou de laitier granulé avec une fraction de 0,5-25 % en masse par rapport à la masse du liant.

7. Béton cellulaire produit selon le procédé selon l'une quelconque des revendications 1 à 5, dans lequel la répartition des bulles d'air à tailles différentes dans la matrice du béton cellulaire permet en fonction de sa consistance une résistance à la pression allant jusqu'à 30 N/mm$^2$ après le durcissement, et le béton cellulaire est durcissable à l'air sous une pression atmosphérique à une température ambiante normale.

8. Béton cellulaire selon la revendication 7, **caractérisé en ce que** les pores du béton cellulaire sont présents selon une répartition sensiblement homogène des pores à tailles différentes à l'intérieur de la matrice du béton cellulaire.

9. Béton cellulaire selon l'une quelconque des revendications 7 ou 8, **caractérisé en ce que** le béton cellulaire présente une matrice composée de béton à résistance élevée ou très élevée et à perméabilité inférieure, de préférence composée de ce qu'on appelle un béton à ultra-hautes performances BUHP ou un béton à hautes performances BHP.

10. Béton cellulaire selon l'une quelconque des revendications 7 à 9, **caractérisé en ce que** la masse volumique apparente du béton cellulaire va jusqu'à 1.200 kg/m$^3$.

Fig. 1a

Fig. 1b

EP 2 074 074 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1050521 A1

**In der Beschreibung aufgeführte Nicht-Patentliteratur**

- *Chemical Abstracts,* 17. Mai 1993, vol. 118 (20

- **BOKOVA, L. I.** *Naturally hardened aerated ash concrete for monolithic house construction,* 327